# EUROPÄISCHE PATENTSCHRIFT

(11) **EP 2 945 869 B1**
(45) Veröffentlichungstag und Bekanntmachung des Hinweises auf die Patenterteilung: **27.09.2017**
(21) Anmeldenummer: 13796050.6
(22) Anmeldetag: 26.11.2013
(51) Int. Cl.: B65B 35/16, B65G 47/90, B65G 47/82, B65G 47/84

(54) **VORRICHTUNG UND VERFAHREN ZUR ÜBERGABE EINES PACKGUTES IN EINER VERPACKUNGSMASCHINE**
DEVICE AND METHOD FOR THE TRANSFER OF AN ITEM FOR PACKING IN A PACKAGING MACHINE
PROCÉDÉ ET DISPOSITIF POUR LE TRANSFERT D'UN OBJET À EMBALLER DANS UNE MACHINE D'EMBALLAGE

(30) Priorität: 16.01.2013 DE 102013200600
(43) Veröffentlichungstag der Anmeldung: 25.11.2015
(73) Patentinhaber: Robert Bosch GmbH, 70442 Stuttgart (DE)
(72) Erfinder: WEIS, Josef, 69226 Nussloch (DE); LOBE, Fritz-Gerald, 70186 Stuttgart (DE)
(86) Internationale Anmeldenummer: PCT/EP2013/074677
(87) Internationale Veröffentlichungsnummer: WO 2014/111185

(56) Entgegenhaltungen:
- EP-A2- 1 767 474
- WO-A1-88/07492
- DE-A1- 19 512 570
- US-A- 3 938 645
- US-A1- 2010 151 069

## Beschreibung

### Stand der Technik

Die Erfindung betrifft eine Vorrichtung und ein Verfahren zur Übergabe eines Packgutes in einer Verpackungsmaschine nach dem Oberbegriff der unabhängigen Ansprüche. Eine gattungsgemäße Vorrichtung ist bereits aus der DE 100 48 007 A1 bekannt. In einer Verpackungsmaschine wird ein Packgut von einem an einem umlaufenden Endlosförderer angebrachten und von diesem angetriebenen Schubelement hintergriffen und aus einer Übernahmestation entlang einer Gleitfläche zur Übergabe an eine weiterführende Fördervorrichtung verschoben. Um eine präzise Übergabe zu gewährleisten, wird das Packgut während seiner Verschiebung zwischen dem Schubelement und einem vorlaufenden Begrenzungselement unter enger Passung geführt. Jedem der beiden Endlosförderer ist jeweils eine eigene Antriebsvorrichtung zugeordnet, so dass diese unabhängig voneinander angetrieben werden können zur Betätigung der das Packgut greifenden Fingergabeln.

### Einschub für die Beschreibungseinleitung (anzufügen an Seite 1, Zeile 24)

Aus der US 3938645 A ist eine Transfervorrichtung und Verfahren für Giebel-Verpackungen bekannt. Bereits geformte, befüllte und versiegelte Kartonverpackungen werden von Aufnahmetaschen durch einen Transfermechanismus entnommen und auf ein Transfersystem gebracht. Die Transferstation umfasst einen Rahmen sowie eine den Falz der Kopfseite greifende Klemme. Diese Klemme wird unterstützt durch entsprechende Haltemittel. Die Klemmbacken sind jeweils rotierend an zugehörigen Achsen befestigt und werden kurvengesteuert geöffnet und geschlossen. Die Übergabevorrichtung bewegt weiterhin diese Klemme im Sinne einer Transferbewegung.

Aus der US 2010/0151069 A1 ist eine Transfervorrichtung für Behältnisse bekannt. Hierbei sind mehrere Greifer vorgesehen, die zum Transport von mehreren Behältnissen deren Hälse umgreifen. Hierbei sind Federn vorgesehen, um die Greiferbacken in gewünschten Positionen zu halten oder zu bringen.

Aus der EP 1767 474 A2 ist eine Vorrichtung zum Handhaben von Gegenständen wie Kartons bekannt. Diese enthält wenigstens einen Greifer, der zum Handhaben der Gegenstände bewegbar ist, wobei die Greifereinrichtung wenigstens einen Selbstfahrträger enthält, auf dem der wenigstens eine Greifer und ein motorischer Fahrantrieb zum Bewegen des Selbstfahrträgers angeordnet sind. Zur Betätigung des Greifers ist ein erster Betätigungsantrieb vorgesehen, der über ein Hebelgetriebe die Klappe öffnet und schließt. Es ist ein zweiter Betätigungsantrieb vorgesehen, mit dem der Greifabstand zwischen den beiden Klappen eingestellt werden kann. Die beiden Betätigungsantriebe sind bevorzugt als elektrisch betätigbare Antriebe ausgebildet.

Aus der WO 88/07492 A1 ist bereits eine Lineareinheit zum Umsetzen von Gegenständen bekannt. Hierbei sind vertikal und horizontal bewegliche Greifer zum Greifen von Gegenständen vorgesehen. Ein zwischen einer Aufnahme- und Abgabeposition verfahrbarer Greiferträger wird zur Erzielung eines konstruktiv einfachen Aufbaus bei hoher Zuverlässigkeit und Robustheit der Lineareinheit der Bewegungsablauf der Greifer zum Aufnehmen der Gegenstände in der Aufnahmeposition und zum Absetzen der Gegenstände in der Abgabeposition durch einen Überhub des Greiferträgers nach Erreichen der Aufnahme- und Abgabeposition erzwungen. Jeder Greifer weist einen im Unterschlitten mit einem Bund drehbar gelagerten vertikalen Greifarm und einen auf dem Greifarm schwenkbeweglichen Greiffinger auf. Der Greifarm trägt an seinem einen Ende ein Zahnritzel und ist am anderen Ende mit einer Wendel versehen. Das Zahnritzel kämmt mit einem Zahnstangenabschnitt, der im Bohrschlitten befestigt ist. Es ist Aufgabe der vorliegenden Erfindung, eine schonende Übergabe des Packguts zu gewährleisten bei einer vereinfachten und platzsparenden Anordnung. Diese Aufgabe wird gelöst durch die Merkmale der unabhängigen Ansprüche.

### Vorteile der Erfindung

Die erfindungsgemäße Vorrichtung und das erfindungsgemäße Verfahren zur Übergabe eines Packgutes in einer Verpackungsmaschine nach den Merkmalen der unabhängigen Ansprüche hat demgegenüber den Vorteil, dass lediglich nur noch eine Linearachse vorgesehen ist, die über nur einen Servoantrieb oder auch anderweitig betätigt werden kann. Entlang dieser Linearachse ist ein Schlitten vorgesehen, der die beiden Finger verschiebt.

Erfindungsgemäß ist vorgesehen, dass zumindest ein Betätigungsmittel an dem Schlitten angeordnet ist, über welches zumindest ein Finger betätigt werden kann. Dies erlaubt ebenfalls eine platzsparende und einfache Ansteuerung der Finger. Außerdem gewährleisten die beiden Finger eine besonders schonende Aufnahme und Übergabe des Packguts in der Verpackungsmaschine. Erfindungsgemäß ist am Schlitten zumindest ein schwenkbares Teil vorgesehen, das mit dem Zylinder und der Kurvenrolle verbunden ist und auf zumindest einen Finger einwirkt. Dadurch lassen sich in besonders einfacher Weise die vorteilhaften mechanischen Wechselwirkungen zwischen Kurvenrolle und Zylinder mit den Fingerbewegungen koppeln.

In einer zweckmäßigen Weiterbildung sind als Betätigungsmittel ein Pneumatikzylinder und/oder eine mit einer Kulisse zusammenwirkende Kurvenrolle vorgesehen. Dadurch kann sicher gewährleistet werden, dass die gewünschten Positionen der Finger beibehalten werden.

In einer zweckmäßigen Vorrichtung ist vorgesehen, dass die mit der Kulisse zusammenwirkende Kurvenrolle den Zylinder bewegt oder dass der Zylinder die Kurvenrolle bewegt. Damit kann besonders einfach eine Rückhubbewegung des Zylinders auf mechanischem Wege erreicht werden. Alternativ kann eine Bewegung des Zylinders auch dafür genutzt werden, dass die Kurvenrolle in die gewünschte Position gebracht wird.

In einer zweckmäßigen Weiterbildung ist ein Kopplungsmechanismus vorgesehen, der die beiden Finger mechanisch miteinander koppelt. Dadurch wird die Betätigung der Finger weiter vereinfacht.

In einer zweckmäßigen Weiterbildung ist vorgesehen, dass ein Mitnehmer mit einem Halteteil zumindest eines Fingers zusammenwirkt. Damit kann in besonders einfacher Weise die Vorrichtung zum Übergeben eines Packguts an die jeweilige Packgutgröße angepasst werden, ohne dass ein Austausch von Formatteilen notwendig wäre.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung und des erfindungsgemäßen Verfahrens zur Übergabe eines Packgutes in einer Verpackungsmaschine ist in der Zeichnung dargestellt und wird nachfolgend näher beschrieben.

Es zeigen:
- Fig. 1: eine perspektivische Darstellung der Vorrichtung zur Übergabe eines Packgutes in einer Verpackungsmaschine,
- Fig. 2: eine Vorderansicht der Übergabevorrichtung,
- Fig. 3: eine perspektivische Darstellung der Übergabevorrichtung in der Rückansicht,
- Fig. 4: eine Rückansicht der Übergabevorrichtung in der Stellung "geschlossen" kurz vor Erreichen der Übergabeposition,
- Fig. 5: eine Rückansicht der Übergabevorrichtung bei Start des Rückhubs,
- Fig. 6: eine Vorderansicht der Übergabevorrichtung während des Rückhubs,
- Fig. 7: eine Rückansicht der Übergabevorrichtung während des Rückhubs zu Beginn des Eingriffs einer Kurvenrolle in einer Kulisse,
- Fig. 8: eine Rückansicht der Übergabevorrichtung während des Rückhubs in einer Zwischenstellung beim Schließen der Finger,
- Fig. 9: eine Vorderansicht der Übergabevorrichtung während des Rückhubs in der Zwischenstellung beim Schließen der Finger,
- Fig. 10: eine Rückansicht der Übergabevorrichtung in der Entnahmeposition sowie
- Fig. 11: eine Vorderansicht der Übergabevorrichtung in der Entnahmeposition.

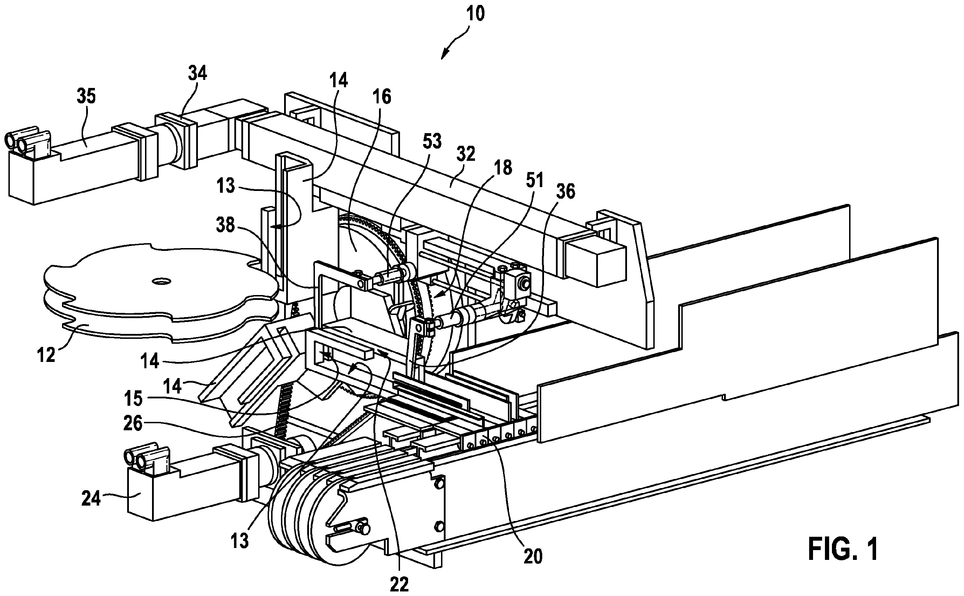

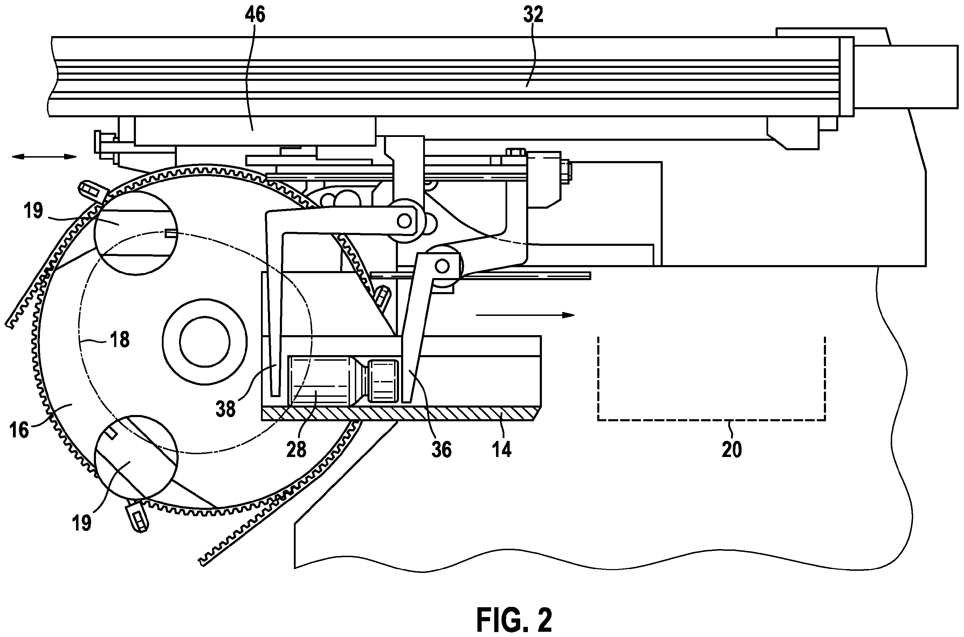

Bei dem Ausführungsbeispiel gemäß Fig. 1 wird Packgut 28 wie beispielsweise in Fig. 2 dargestellte Fläschchen oder sonstige Behältnisse stehend einem Vereinzelungsrad 12 zugeführt. Das um die vertikale Achse drehbar gelagerte Vereinzelungsrad 12 bewegt das vereinzelte Packgut 28 in den Erfassungsbereich einer Packgutaufnahme 14. Das Packgut 28 wird hierbei in die Packgutaufnahme 14 stehend überführt (Einlaufposition). Die Packgutaufnahme 14 ist in dem Ausführungsbeispiel im Wesentlichen rechteckförmig ausgeführt. Die dem Vereinzelungsrad 12 zugewandte Seite der Packgutaufnahme 14 weist eine entsprechende seitliche Öffnung 13 oder Ausnehmung auf, so dass hierüber das Packgut 28 in das Innere der Packgutaufnahme 14 überführt werden kann und auf einem Boden 15 zu stehen kommt. Nach oben hin ist die Packgutaufnahme 14 offen, so dass das Packgut 28 nach dem Ausrichten über diese obere Öffnung wieder entnommen werden kann. Die Packgutaufnahme 14 ist schwenkbar gelagert und schwenkbar mit einem Rotor 16 verbunden. Beispielhaft sind noch drei weitere Packgutaufnahmen 14 gezeigt, die jeweils um 120 Grad versetzt an dem Rotor 16 angeordnet sind.

Der Rotor 16 wird über einen Riemen 26 von einem Antrieb 24 bewegt. In Blickrichtung hinter dem Rotor 16 ist eine Kulisse 18 vorgesehen. Die Kulisse 18 ist scheibenförmig ausgebildet und gegenüber dem Rotor 16 feststehend angeordnet. Die Kulisse 18 wirkt mit Betätigungsmitteln wie beispielsweise Laufrollen der Packgutaufnahmen 14 zusammen, so dass eine gezielte Schwenkung der einzelnen Packgutaufnahmen 14 relativ zum Rotor 16 erreicht wird. Diese Schwenkbewegung der Packgutaufnahme 14 wird der Drehbewegung des Rotors 16 und der Packgutaufnahmen 14 überlagert. Die Rotordrehachse und die Schwenkachse der Packgutaufnahme 14 sind zueinander parallel. Durch eine geeignete Erzeugung der Schwenkbewegung der Packgutaufnahme 14 kann ein Herausfallen des Packguts 28 trotz Bewegung des Rotors 16 verhindert werden. Die Packgutaufnahme 14 weist an einer Seite einen Schlitz 22 auf, in den ein Entnahmemittel wie beispielsweise zumindest ein Finger 36, 38 eines Greifers oder ähnliches zur leichteren Entnahme des Packguts 28 eingreifen kann.

Zur Überführung des stehenden Packguts 28 in eine liegende Position wird der Rotor 16 von der Einlaufposition um eine horizontale Drehachse um 90° gedreht. In dieser Entnahmeposition ist die obere Öffnung der Packgutaufnahme 14 fluchtend ausgerichtet mit einer Packgutkette 20, so dass das Packgut 28 quer zur Rotordrehachse entnommen oder seitlich herausgeschoben werden kann. Das liegende Packgut 28 wird in ein bereit stehendes Fach der Packgutkette 20 überführt, indem es beispielsweise mit einem vorauseilenden Finger 36 im Kopfbereich und einem nacheilenden Finger 38 im Bodenbereich gegriffen bzw. geklemmt wird.

Die beiden Finger 36, 38 sind über einen Schlitten 46 mit einer Linearachse 32 verbunden. Die Finger 36, 38 sind über Wellen 51, 53 mit dem Schlitten 46 so verbunden, dass sie gegenüber dem Schlitten 46 und der Linearachse 32 nach vorne überstehen und bei einer Drehbewegung nicht mit dem Schlitten 46 und der Linearachse 32 kollidieren. Der Schlitten 46 ist an der Unterseite der Linearachse 32 angeordnet. Zur Übergabe des Packguts 28 bewegt die Linearachse 32 den Schlitten 46 bei gegriffenem Packgut 28 von der Entnahmeposition nach rechts in den Erfassungsbereich der Packgutkette 20 in die Übergabeposition. In der Übergabeposition werden die Finger 36, 38 geöffnet. Das Packgut 28 kommt auf der Packgutkette 20 zu liegen. Anschließend werden die Finger 36, 38 in eine Position nach oben verschwenkt, in der sich das abgelegte Packgut 28 nicht mehr im Erfassungsbereich der Finger 36, 38 befindet. Danach wird der Schlitten 46 wieder nach links in die Entnahmeposition zurückbewegt, um das nächste, in der weitergedrehten nächsten Packgutaufnahme 14 bereitstehende Packgut 28 zu entnehmen. Hierzu greifen die Finger 36, 38 wieder in den Schlitz 22, um das Packgut 28 zu klemmen. Der Schlitten 46 wird über die Linearachse 32 bewegt, beispielsweise über einen Servoantrieb 35, der mit einem Anbauflansch 34 mit der Linearachse 32 zusammenwirkt. Alternative Ausgestaltungen sind hierbei denkbar.

Die Packgutkette 20 als Beispiel für eine übliche Transportvorrichtung bewegt das liegende Packgut 28 zu einem weiteren Verarbeitungsschritt der Verpackungsmaschine. Beispielsweise können die Packgüter 28 anschließend in eine Faltschachtel überführt und verpackt werden, gegebenenfalls unter vorheriger Beifügung von Beipackzetteln oder ähnlichem. Die beschriebenen Komponenten sind bevorzugt Teil einer Verpackungsmaschine 10.

In Fig. 2 sind noch weitere Details der Vorrichtung zur Übergabe des Packguts 28 in der Verpackungsmaschine 10 gezeigt. Der Übersichtlichkeit halber ist lediglich eine einzige Packgutaufnahme 14 gezeigt, während bei zwei weiteren Kopplungsmitteln 19 die dort zu befestigenden Packgutaufnahmen 14 fehlen. Die Kopplungsmittel 19 lassen sich relativ zu dem Rotor 16 bewegen bzw. verdrehen. Dadurch wird eine Schwenkbewegung der Packgutaufnahme 14 relativ zum Rotor 16 möglich, um ein Herausfallen des von der Einlaufposition in die Entnahmeposition zu überführenden Packguts 28 zu verhindern. In der in Figur 2 gezeigten Entnahmeposition sind vorauseilender Finger 36 und nacheilender Finger 38 gerade im Begriff, das Packgut 28 zu greifen. Der Schlitten 46 ist relativ zu der Linearachse 32 beweglich angeordnet wie der Doppelpfeil symbolisieren soll.

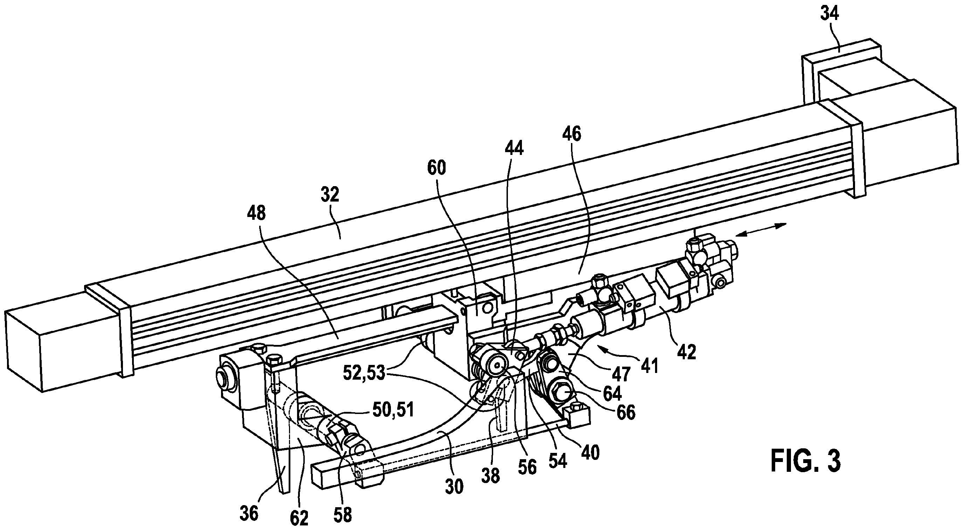

Wie der perspektivischen Rückansicht der Fig. 3 zu entnehmen, ist der Schlitten 46 verschieblich gelagert mit der Linearachse 32 verbunden. Mit dem Schlitten 46 verbunden ist ein Mitnehmer 60. Der Mitnehmer 60 dient der Aufnahme eines Halteteils 48 und der Kopplung mit dem Schlitten 46. Zum anderen wird die Welle 53 des nacheilenden Fingers 38 gelagert. An dem Mitnehmer 60 ist ein plattenförmiges Halteteil 47 befestigt, an dem wiederum ein Betätigungsmittel 41 angeordnet ist. Das Betätigungsmittel 41 umfasst einen Zylinder 42, der auf ein Hebelteil 44 einwirkt. Das winkelförmige Hebelteil 44 ist drehbar gelagert mit dem Halteteil 47 verbunden. An dem einen Ende des Hebelteils 44 ist eine Kurvenrolle 56 drehbar gelagert mit diesem verbunden. Die Kurvenrolle 56 und damit das Hebelteil 44 können über eine relativ zum Schlitten 46 feststehenden Kulisse 30 betätigt werden. In einem mittleren Bereich des Hebelteils 44 ist der Zylinder 42 mit diesem verbunden. An dem anderen Ende des Hebelteils 44 ist ein Hebel 54 schwenkbar befestigt. Das andere Ende des Hebels 54 ist mit der Welle 53 des nacheilenden Fingers 38 verbunden. Eine eventuelle Schwenkbewegung des Hebels 54 bewirkt eine Drehung der Welle 53. Das Ende des Hebels 44 lässt sich auch entlang eines kreissegmentförmigen Abschnitts des Halteteils 47 verschieben. An dem Ende des Hebels 54 ist zudem ein weiterer Hebel 64 befestigt. Der weitere Hebel 64 ist etwa in der Mitte um einen Drehpunkt 66 verschwenkbar mit dem Halteteil 47 verbunden. Das andere Ende des Hebels 64 ist mit einer Koppelmechanik wie eine Koppelstange 40 verbunden. Das andere Ende der Koppelstange 40 wirkt über einen Hebel 58 auf die Welle 51 des vorauseilenden Fingers 36 ein. Dadurch wird der vorauseilende Finger 36 verschwenkt.

Der vorauseilende Finger 36 ist mit einem weiteren Halteteil 48 über eine Befestigung 62 verbunden. Der vorauseilende Finger 36 kann entlang einer Schwenkachse 50 um die Welle 51 verschwenkt werden. Auch der nacheilende Finger 38 ist mit dem Mitnehmer 60 bzw. mit dem Schlitten 46 verbunden. Der nacheilende Finger 38 lässt sich über das Betätigungsmittel 41 und/oder die Kurvenrolle 56 um eine Schwenkachse 52 der Welle 53 im Sinne eines Öffnens und Schließens betätigen. Der nacheilende Finger 38 weist eine winkelförmige bzw. L-förmige Gestalt auf. Als Betätigungsmittel 41 ist der Zylinder 42, beispielsweise ein Pneumatikzylinder vorgesehen.

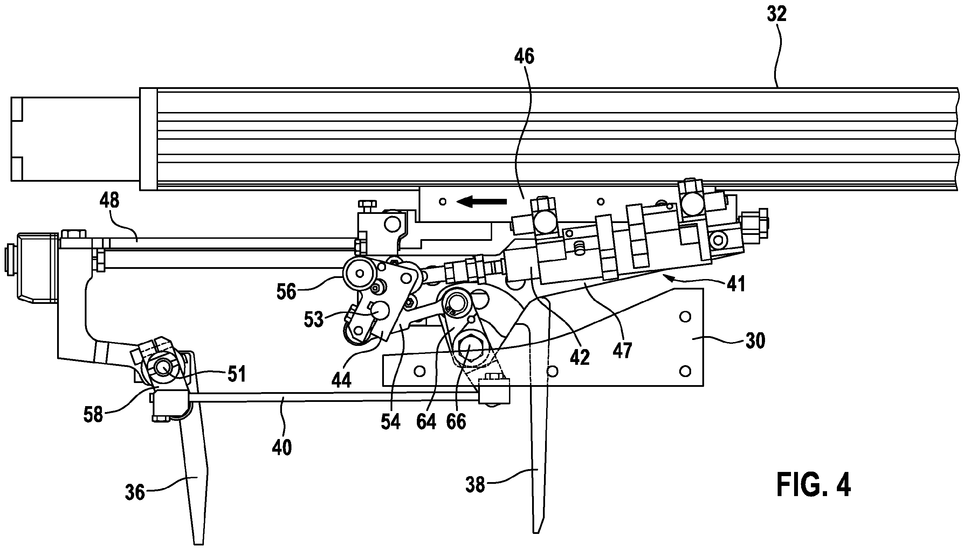

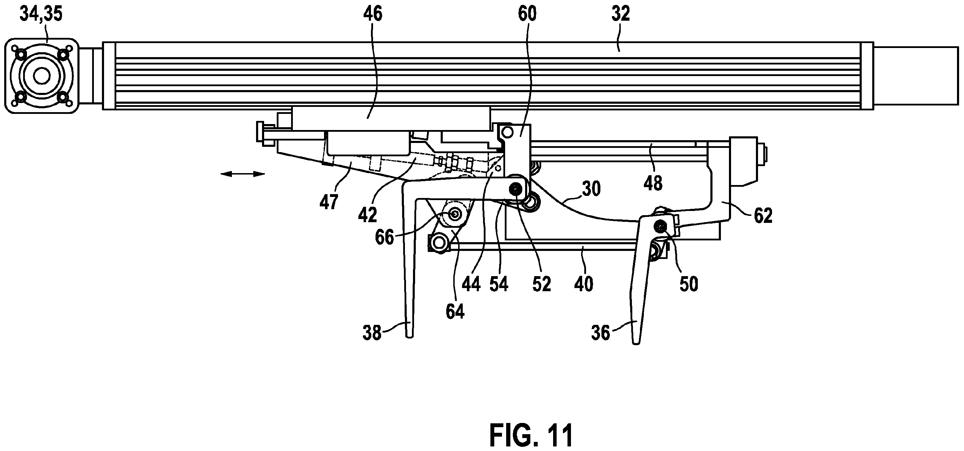

Die Betriebsweise der Vorrichtung zur Übergabe eines Packguts 28 in einer Verpackungsmaschine wird anhand der unterschiedlichen Stellungen der Finger 36, 38 gemäß den Figuren 4 bis 11 weiter erläutert.

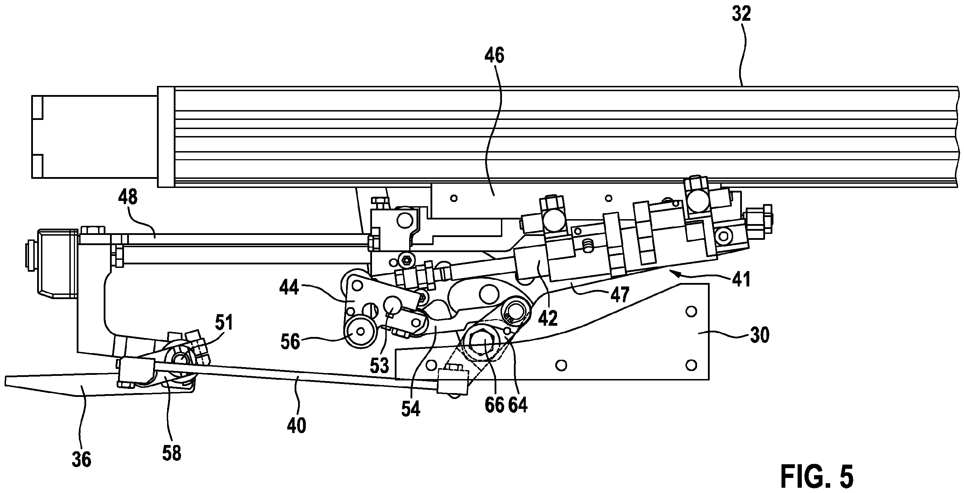

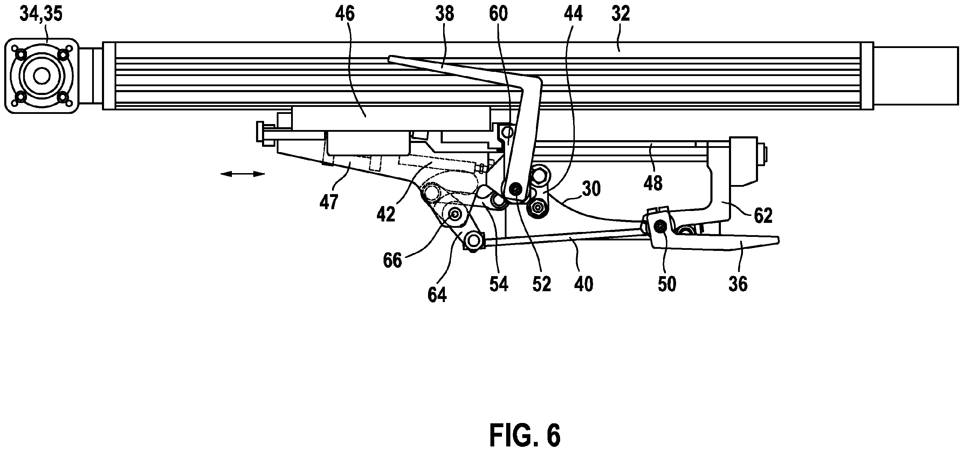

Bei der in Figur 4 gezeigten Position kurz vor Erreichen der Übergabeposition haben die Finger 36, 38 das aus Übersichtlichkeitsgründen nicht gezeigte Packgut 28 gegriffen. Der Zylinder 42 ist eingefahren. Die Finger 36, 38 sind geschlossen. Das Packgut 28 wird über den mit Druck beaufschlagten Zylinder 42 gehalten. Die Kurvenrolle 56 befindet sich nicht in Eingriff mit der Kulisse 30. Der Schlitten 46 bewegt sich in diesem Zustand bis zur Übergabeposition. In der Übergabeposition wird das Packgut 28 in der bereit stehenden Packgutkette 20 abgelegt. Hierzu werden bei Erreichen der Übergabeposition die Finger 36, 38 geöffnet. Der Zylinder 42 wird ausgefahren. Der Zylinder 42 bewegt hierbei das Hebelteil 44 um seinen Drehpunkt. Dadurch wird die Kurvenrolle 56 nach unten verschwenkt. Das andere Ende des Hebelteils 44 wird nach rechts (in der Darstellung der Figuren 4 bzw. 5) verschwenkt, wodurch auch der Hebel 54 entlang der Führung des Befestigungsteils 47 nach rechts verschoben wird. Die Verschiebung des Hebels 54 bewirkt ein Verschwenken der beiden Finger 36, 38. Der vollständig geöffnete Zustand der Finger 36, 38 ist in der Figur 5 (Rückansicht) und Figur 6 (entsprechende Vorderansicht) gezeigt. Das Packgut 28 befindet sich nun in der Packgutkette 20. Der Rückhub des Schlittens 46 zurück zur Entnahmeposition beginnt. Bei Start der Rückhubbewegung des Schlittens 46 wird der Zylinder 42 ausgefahren und bleibt kurz mit Druck beaufschlagt.

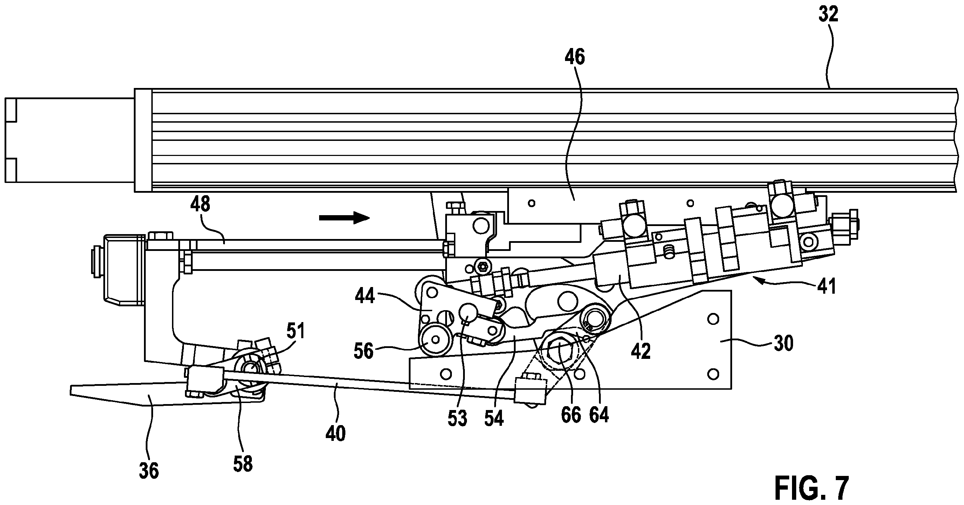

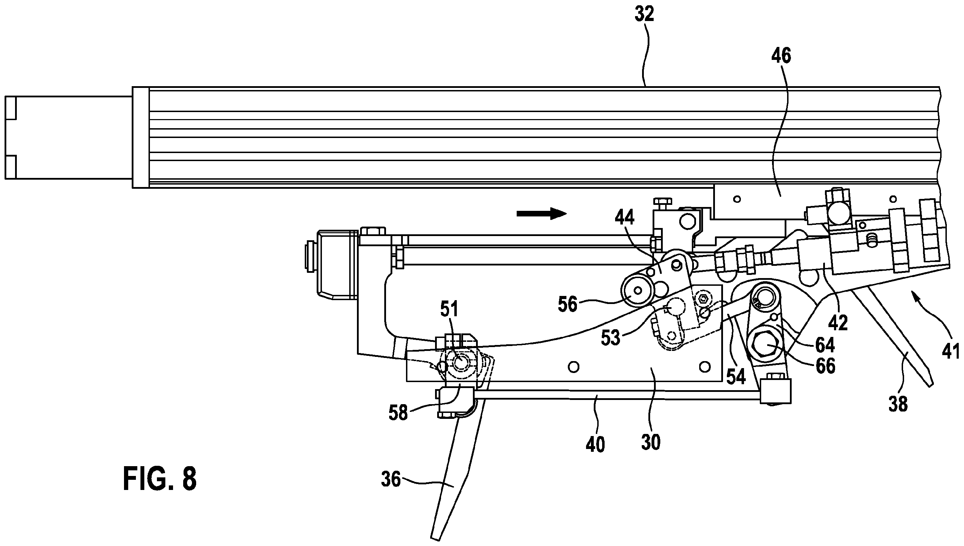

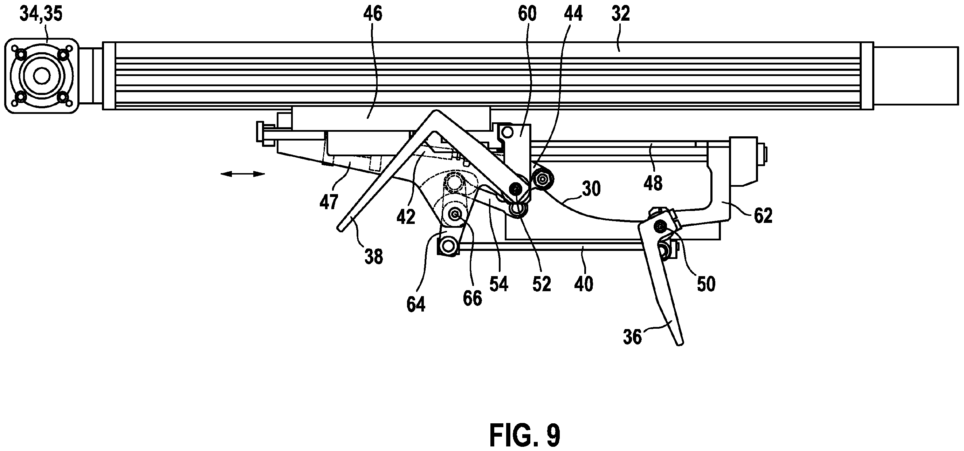

Auf dem Weg zur Entnahmeposition ist der Zylinder 42 drucklos geschaltet. Der Schlitten 46 gelangt in eine Position, in der die Kurvenrolle 56 in Eingriff steht mit der feststehenden Kurve 30 wie in Figur 7 gezeigt. Die Kurve 30 steigt in Richtung zur Entnahmeposition nach oben hin an. Dadurch wird das Hebelteil 44 so verschenkt, dass es den Zylinder 42 einfährt. Außerdem wird auch der Hebel 54 nach links (gemäß der Darstellung der Figuren 7 und 8) entlang der Führung bewegt. Dadurch werden die Finger 36, 38 allmählich geschlossen. Dies ist in der Zwischenstellung der Figur 8 (Rückansicht) und Figur 9 (entsprechende Vorderansicht) gezeigt.

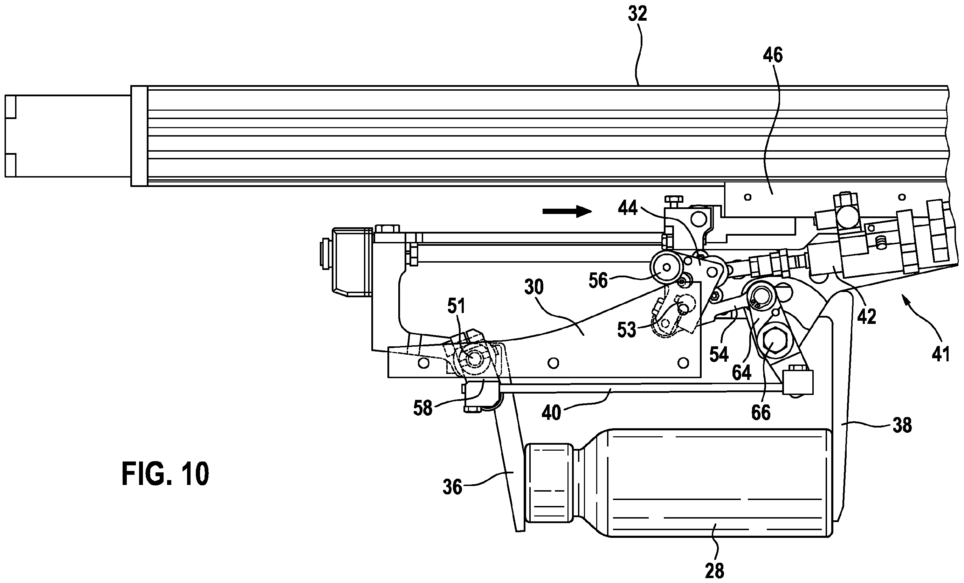

In der Endlage der Bewegung wie in Figur 10 gezeigt sind die Finger 36, 38 geschlossen und umschließen das Packgut 28. Der Zylinder 42 wird mit Druck beaufschlagt. Der Schlitten 46 bewegt sich wieder in die andere Richtung hin zur Übergabeposition. Der Ablauf wie bereits in Zusammenhang mit Figur 4 beschrieben schließt sich an.

Dank der Kulisse 30 in Verbindung mit der Kurvenrolle 56 verbleiben die Finger 36, 38 gerade im Bereich der Entnahmeposition in der gewünschten Position. Durch die Zwangsführung mittels der Kulisse 30 wird selbst bei Ausfall der Druckluft sichergestellt, dass die Finger 36, 38 keine unkontrollierten Bewegungen vollziehen und ein bereits im Erfassungsbereich der Finger 36, 38 liegendes Packgut 28 nicht beschädigt wird. Zudem wird über die Kulisse 30 der Zylinder 42 wieder eingefahren.

Anders als bei einem einfingrigen System bremst der vorauseilende Finger 36 das Packgut 28 ab, so dass es nicht gegen einen sonst erforderlichen Anschlag fährt. Dadurch wird eine besonders schonende Packgutübergabe erreicht.

Befinden sich die Finger 36, 38 wieder in der Entnahmeposition, schließt sich der eingangs bereits geschilderte Greifvorgang an, nachdem der Rotor 16 mit einer 120°-Drehung das nächste Packgut 28 von der stehenden in die liegende Entnahmeposition überführt hat.

Es sind auch alternative Ausgestaltungen denkbar. So könnte die Linearachse 32 durch unterschiedliche Antriebe 35 betätigt werden, wie beispielsweise Servoantrieb, Druckluft, hydraulisch oder sonstige dem Fachmann geläufige Antriebskonzepte. Auch die Verstellung der Finger 36, 38 könnte anstelle mit einem Zylinder 42 wie beispielsweise einem Pneumatikzylinder auch elektromotorisch oder auf sonstigem Wege erfolgen. Auch könnten die Finger 36, 38 durch separate Antriebsmittel einzeln betätigt werden, so dass auf den Kopplungsmechanismus 40 verzichtet werden könnte.

Die beschriebene Vorrichtung und Verfahren zur Übergabe eines Packgutes 28 in einer Verpackungsmaschine eignet sich insbesondere für Packgut 28, das besonders schonend übergeben werden muss wie beispielsweise zerbrechliche Glasfläschchen oder ähnliches. Die Verwendung ist jedoch hierauf nicht eingeschränkt.

## Patentansprüche

1. Vorrichtung zur Übergabe eines Packgutes in einer Verpackungsmaschine, umfassend zumindest eine Packgutaufnahme (14), zumindest eine Transportvorrichtung (20), zumindest einen vorauseilenden Finger (36) und zumindest einen nacheilenden Finger (38) zur Entnahme zumindest eines Packguts (28) aus der Packgutaufnahme (14) in einer Entnahmeposition und zur Zuführung des Packguts (38) zu der Transportvorrichtung (20), zumindest ein Betätigungsmittel (42; 30, 56) zum Betätigen zumindest eines Fingers (36, 38), wobei zumindest ein Schlitten (46) vorgesehen ist, an dem die Finger (36, 38) befestigt sind, wobei zumindest eine Linearachse (32) vorgesehen ist zum Bewegen des Schlittens (46) von der Entnahmeposition in die Übergabeposition, wobei als Betätigungsmittel zumindest ein Zylinder (42) insbesondere ein Pneumatikzylinder, und zumindest eine mit einer Kulisse (30) zusammenwirkende Kurvenrolle (56) vorgesehen sind, wobei das Betätigungsmittel (42, 56) mit dem Schlitten (46) verbunden ist, wobei am Schlitten (42) zumindest ein schwenkbares Teil (44) vorgesehen ist, das mit dem Zylinder (42) und der Kurvenrolle (56) verbunden ist und auf zumindest einen Finger (36, 38) einwirkt, wobei die Kurvenrolle (56) und damit das schwenkbare Teil (44) über die relativ zum Schlitten (46) feststehende Kulisse (30) betätigbar sind.

2. Vorrichtung nach Anspruch 1, **dadurch gekennzeichnet, dass** zumindest ein Kopplungsmechanismus (40) vorgesehen ist, der die beiden Finger (36, 38) so koppelt, dass die Finger (36, 38) gemeinsam betätigt werden.

3. Vorrichtung nach einem der vorhergehenden Ansprüche, **dadurch gekennzeichnet, dass** in der Nähe der Entnahmeposition zumindest ein Finger (36, 38) durch die mit der Kulisse (30) zusammenwirkende Kurvenrolle (56) betätigt ist.

4. Vorrichtung nach einem der vorhergehenden Ansprüche, **dadurch gekennzeichnet, dass** die mit der Kurve (30) zusammenwirkende Kurvenrolle (56) den Zylinder (42) bewegt oder dass der Zylinder (42) die Kurvenrolle (56) bewegt.

5. Verfahren zur Übergabe eines Packgutes in einer Verpackungsmaschine, wobei zumindest eine Packgutaufnahme (14) das zu übergebende Packgut (28) bereitstellt, wobei zumindest ein vorauseilender Finger (36) und ein nacheilender Finger (38) das Packgut (28) in einer Entnahmeposition aus der Packgutaufnahme (14) entnehmen und in einer Übergabeposition einer Transportvorrichtung (20) zuführen, wobei zumindest ein Finger (36, 38) durch ein Betätigungsmittel (42; 30, 56) betätigt wird, wobei die Finger (36, 38) mit zumindest einem Schlitten (46) verbunden sind, und der Schlitten (46) von einer Linearachse (32) zur Übergabe des Packguts (28) bewegt wird, wobei zumindest ein Finger (36, 38) durch eine mit einer Kulisse (30) zusammenwirkende Kurvenrolle (56) und einen Zylinder (42), insbesondere einen Pneumatikzylinder als Betätigungsmittel betätigt wird, wobei das Betätigungsmittel (42, 56) mit dem Schlitten (46) verbunden ist, wobei am Schlitten (42) zumindest ein schwenkbares Teil (44) vorgesehen ist, das mit dem Zylinder (42) und der Kurvenrolle (56) verbunden ist und auf zumindest einen Finger (36, 38) einwirkt, wobei die Kurvenrolle (56) und damit das schwenkbare Teil (44) über die relativ zum Schlitten (46) feststehende Kulisse (30) betätigt wird .

6. Verfahren nach einem der vorhergehenden Verfahrensansprüche, **dadurch gekennzeichnet, dass** in der Nähe der Entnahmeposition zumindest ein Finger (36, 38) durch die Kurvenrolle (56) betätigt wird.

7. Verfahren nach einem der vorhergehenden Verfahrensansprüche, **dadurch gekennzeichnet, dass** die mit der Kulisse (30) zusammenwirkende Kurvenrolle (56) den Zylinder (42) bewegt oder dass der Zylinder (42) die Kurvenrolle (56) bewegt.

8. Verfahren nach einem der vorhergehenden Verfahrensansprüche, **gekennzeichnet durch** folgende Schritte:
- die Finger (36, 38) entnehmen des Packguts (28) in der Entnahmposition,
- der Schlitten (46) bewegt die Finger (36, 38) in die Übergabeposition,
- die Finger öffnen sich zur Übergabe des Packguts (28),
- die Finger (36, 38) werden in eine Rückhubposition gebracht,
- der Schlitten (46) bewegt die Finger (36, 38) in die Entnahmeposition.

9. Verfahren nach einem der vorhergehenden Verfahrensansprüche, **gekennzeichnet durch** folgende Schritte:
- beim der Bewegung des Schlittens (46) von der Übergabeposition in Richtung der Entnahmeposition wird der Zylinder (42) ausgefahren und/oder kurz mit Druck beaufschlagt,
- im Rückhub wird der Zylinder (42) drucklos geschaltet, wenn die Kurvenrolle (56) in Kontakt ist mit der Kulisse (30),
- durch die Kurvenrolle (56) wird der Zylinder (42) eingefahren und/oder zumindest ein Finger (36, 38) geschlossen.

## Claims

1. Device for transferring an item for packaging in a packaging machine, said device comprising at least one receptacle for items for packaging (14), at least one transportation device (20), at least one leading finger (36) and at least one trailing finger (38) for removing at least one item for packaging (28) in a removal position from the receptacle for items for packaging (14) and for feeding the item for packaging (38) to the transportation device (20), at least one activation means (42; 30, 56) for activating at least one finger (36, 38), wherein at least one slider (46) to which the fingers (36, 38) are fastened is provided, wherein at least one linear axis (32) is provided for moving the slider (46) from the removal position to the transfer position, wherein at least one cylinder (42), in particular a pneumatic cylinder, and at least one cam roller (56) that interacts with a gate (30) are provided as the activation means, wherein the activation means (42, 56) is connected to the slider (46), wherein at least one pivotable part (44) which is connected to the cylinder (42) and to the cam roller (56) and acts on at least one finger (36, 38) is provided on the slider (42), wherein the cam roller (56) and thus the pivotable part (44) are activatable by way of the gate (30) that is stationary relative to the slider (46).

2. Device according to Claim 1, **characterized in that** at least one coupling mechanism (40) which couples the two fingers (36, 38) such that the fingers (36, 38) are conjointly activated is provided.

3. Device according to one of the preceding claims, **characterized in that** at least one finger (36, 38) is activated in the proximity of the removal position by the cam roller (56) that interacts with the gate (30).

4. Device according to one of the preceding claims, **characterized in that** the cam roller (56) that interacts with the curve (30) moves the cylinder (42), or **in that** the cylinder (42) moves the cam roller (56).

5. Method for transferring an item for packaging in a packaging machine, wherein at least one receptacle for items for packaging (14) provides the item for packaging (28) to be transferred, wherein at least one leading finger (36) and one trailing finger (38) in a removal position remove the item for packaging (28) from the receptacle for items for packaging (14) and in a transfer position feed said item for packaging (28) to a transportation device (20), wherein at least one finger (36, 38) is activated by way of an activation means (42; 30, 56), wherein the fingers (36, 38) are connected to at least one slider (46) and the slider (46) is moved by a linear axis (32) to transfer the item for packaging (28), wherein at least one finger (36, 38) is activated by a cam roller (56) that interacts with a gate (30) and by a cylinder, in particular a pneumatic cylinder, as activation means, wherein the activation means (42, 56) is connected to the slider (46), wherein at least one pivotable part (44) which is connected to the cylinder (42) and to the cam roller (56) and acts on at least one finger (36, 38) is provided on the slider (42), wherein the cam roller (56) and thus the pivotable part (44) are activated by way of the gate (30) that is stationary relative to the slider (46).

6. Method according to one of the preceding method claims, **characterized in that** at least one finger (36, 38) is activated in the proximity of the removal position by the cam roller (56).

7. Method according to one of the preceding method claims, **characterized in that** the cam roller (56) that interacts with the gate (30) moves the cylinder (42), or **in that** the cylinder (42) moves the cam roller (56).

8. Method according to one of the preceding method claims, **characterized by** the following method steps
- the fingers (36, 38) remove the item for packaging (28) in the removal position;
- the slider (46) moves the fingers (36, 38) to the transfer position;
- the fingers open for transferring the item for packaging (28);
- the fingers (36, 38) are returned to a reverse-stroke position;
- the slider (46) moves the fingers (36, 38) to the removal position.

9. Method according to one of the preceding method steps, **characterized by** the following method steps:
- in the movement of the slider (46) from the transfer position in the direction toward the removal position, the cylinder (42) is deployed and/or is briefly impinged with pressure;
- the cylinder (42) in the reverse stroke is switched to be without pressure when the cam roller (56) contacts the gate (30);
- the cylinder (42) is retracted and/or at least one finger (36, 38) is closed by the cam roller (56) .

## Revendications

1. Dispositif pour le transfert d'un produit à emballer dans une machine d'emballage, comprenant au moins un logement de produit à emballer (14), au moins un dispositif de transport (20), au moins un doigt situé à l'avant (36) et au moins un doigt situé à l'arrière (38) pour prélever au moins un produit à emballer (28) du logement de produit à emballer (14) dans une position de prélèvement et pour acheminer le produit à emballer (38) au dispositif de transport (20) au -moins un moyen d'actionnement (42 ; 30, 56) pour actionner au moins un doigt (36, 38), au moins un chariot (46) étant prévu, sur lequel sont fixés les doigts (36, 38), au moins un axe linéaire (32) étant prévu pour déplacer le chariot (46) de la position de prélèvement dans la position de transfert, au moins un cylindre (42), en particulier un cylindre pneumatique et au moins un galet de came (56) coopérant avec une coulisse (30) étant prévus en tant que moyen d'actionnement, le moyen d'actionnement (42, 56) étant raccordé au chariot (46), au moins une partie pivotante (44) étant prévue sur le chariot (42), laquelle est raccordée au cylindre (42) et au galet de came (56) et agit sur au moins un doigt (36, 38), le galet de came (56), et avec lui la partie pivotante (44), pouvant être actionnés par le biais de la coulisse (30) fixe par rapport au chariot (46).

2. Dispositif selon la revendication 1, **caractérisé en ce qu'**au moins un mécanisme d'accouplement (40) est prévu, lequel accouple les deux doigts (36, 38) de telle sorte que les doigts (36, 38) sont actionnés en commun.

3. Dispositif selon l'une quelconque des revendications précédentes, **caractérisé en ce qu'**à proximité de la position de prélèvement, au moins un doigt (36, 38) est actionné par le galet de came (56) coopérant avec la coulisse (30).

4. Dispositif selon l'une quelconque des revendications précédentes, **caractérisé en ce que** le galet de came (56) coopérant avec la coulisse (30) déplace le cylindre (42) ou **en ce que** le cylindre (42) déplace le galet de came (56).

5. Procédé pour le transfert d'un produit à emballer dans une machine d'emballage, au moins un logement de produit à emballer (14) fournissant le produit à emballer devant être transféré (28), au moins un doigt situé en avant (36) et un doigt situé en arrière (38) prélevant le produit à emballer (28) dans une position de prélèvement hors du logement de produit à emballer (14) et l'acheminant dans une position de transfert à un dispositif de transport (20), au moins un doigt (36, 38) étant actionné par un moyen d'actionnement (42 ; 30, 56), les doigts (36, 38) étant raccordés à au moins un chariot (46), et le chariot (46) étant déplacé par un axe linéaire (32) pour le transfert du produit à emballer (28), au moins un doigt (36, 38) étant actionné par un galet de came (56) coopérant avec une coulisse (30) et par un cylindre (42), en particulier un cylindre pneumatique en tant que moyen d'actionnement, le moyen d'actionnement (42, 56) étant raccordé au chariot (46), au moins une partie pivotante (44) étant prévue au niveau du chariot (42), laquelle est raccordée au cylindre (42) et au galet de came (56) et agit sur au moins un doigt (36, 38), le galet de came (56), avec lui la partie pivotante (44), étant actionné par le biais de la coulisse (30) fixe par rapport au chariot (46).

6. Procédé selon l'une quelconque des revendications de procédé précédentes, **caractérisé en ce qu'**à proximité de la position de prélèvement, au moins un doigt (36, 38) est actionné par le galet de came (56).

7. Procédé selon l'une quelconque des revendications de procédé précédentes, **caractérisé en ce que** le galet de came (56) coopérant avec la coulisse (30) déplace le cylindre (42) ou **en ce que** le cylindre (42) déplace le galet de came (56).

8. Procédé selon l'une quelconque des revendications de procédé précédentes, **caractérisé par** les étapes suivantes :
- les doigts (36, 38) prélèvent le produit à emballer (28) dans la position de prélèvement,
- le chariot (46) déplace les doigts (36, 38) dans la position de transfert,
- les doigts s'ouvrent pour le transfert du produit à emballer (28),
- les doigts (36, 38) sont amenés dans une position de course de retour,
- le chariot (46) déplace les doigts (36, 38) dans la position de prélèvement.

9. Procédé selon l'une quelconque des revendications de procédé précédentes, **caractérisé par** les étapes suivantes :
- lors du déplacement du chariot (46) de la position de transfert dans la direction de la position de prélèvement, le cylindre (42) est sorti et/ou est brièvement sollicité en pression,
- lors de la course de retour, le cylindre (42) est commuté sans pression lorsque le galet de came (56) est en contact avec la coulisse (30),
- le cylindre (42) est rentré par le galet de came (56) et/ou au moins un doigt (36, 38) est fermé.
